# FASCICULE DE BREVET EUROPEEN

(11) **EP 1 739 456 B1**
(45) Date de publication et mention de la délivrance du brevet: **10.08.2011**
(21) Numéro de dépôt: 06300708.2
(22) Date de dépôt: 21.06.2006
(51) Int. Cl.: G01T 1/17

(54) **Procédé pour optimiser les performances d'un détecteur à semi-conducteur**
Verfahren zum Optimieren der Leistungen eines Halbleiterdetektors
Process for optimising the performance of a semiconductor detector

(30) Priorité: 01.07.2005 FR 0552015
(43) Date de publication de la demande: 03.01.2007
(73) Titulaire: Commissariat à l'Énergie Atomique et aux Énergies Alternatives, 75015 Paris (FR)
(72) Inventeur: Gros d'Aillon, Eric, 38320, BRIE ET ANGONNES (FR); Verger, Loïck, 38000, GRENOBLE (FR)
(74) Mandataire: Vuillermoz, Bruno

(56) Documents cités:
- FR-A- 2 790 560
- US-A1- 2002 036 269
- VERGER L ET AL: "Performance and perspectives of a gamma camera based on CdZnTe for medical imaging" 2003 IEEE NUCLEAR SCIENCE SYMPOSIUM CONFERENCE RECORD. / 2003 IEEE NUCLEAR SCIENCE SYMPOSIUM AND MEDICAL IMAGING CONFERENCE. PORTLAND, OR, OCT. 19 - 25, 2003, IEEE NUCLEAR SCIENCE SYMPOSIUM CONFERENCE RECORD, NEW YORK, NY : IEEE, US, vol. VOL. 5 OF 5, 19 octobre 2003 (2003-10-19), pages 3324-3330, XP010742776 ISBN: 0-7803-8257-9

## Description

### DOMAINE DE L'INVENTION

La présente invention concerne le domaine de la détection de rayonnements électromagnétiques, et plus particulièrement des rayons X et des rayons γ. L'invention met en oeuvre un détecteur à semi-conducteur.

Plus particulièrement l'invention vise le domaine de l'imagerie médicale et scientifique, mais également des contrôles non destructifs de structures, outre le domaine de la sécurité (la détection de produits prohibés ou réglementés dans les bagages et sur les passagers).

De manière plus synthétique, l'invention vise la détection d'un rayonnement électromagnétique permettant d'allier à la fois des performances de résolution d'énergie élevées à des performances tout aussi élevées de résolution spatiale.

### ETAT ANTERIEUR DE LA TECHNIQUE

La mise en oeuvre de détecteurs à semi-conducteur est aujourd'hui bien connue dans le cadre de la détection des rayonnements électromagnétiques. De tels détecteurs réalisent directement la conversion du rayonnement incident en énergie, et ce, sans passer par des étapes intermédiaires du type émission de photons visibles, tel qu'on le connaît dans le domaine des scintillateurs.

Au surplus, l'énergie nécessaire pour créer des charges électriques, et notamment des paires électrons / trous au sein d'un semi-conducteur est beaucoup plus faible que dans un gaz ou dans un scintillateur. Par voie de conséquence, le nombre de charges libres créées par photon détecté est plus important, permettant dès lors d'obtenir une meilleure résolution en énergie, avec un faible bruit.

Enfin, le numéro atomique et la densité élevés des matériaux semi-conducteurs permettent d'utiliser des volumes de détection nettement inférieurs à ceux des détecteurs à gaz ou des scintillateurs, tout en conservant la même efficacité quantique de détection.

La mise en oeuvre de tels détecteurs à semi-conducteur impose l'application d'une tension de polarisation à ce dernier, par le biais de deux électrodes, généralement rapportées sur deux faces opposées du matériau semi-conducteur. Cette tension de polarisation créée un champ électrique, propre à induire le déplacement des charges électriques résultant de l'interaction des photons incidents avec ledit matériau semi-conducteur. En raison du champ électrique résultant de cette tension de polarisation, les électrons créés sont dirigés vers l'anode (électrode positive) et les trous vont se diriger vers la cathode (électrode négative), leurs déplacements induisant de fait, des charges sur la ou les anodes et sur la cathode.

En relation avec les implications envisagées de tels détecteurs, et plus particulièrement dans l'objectif de réaliser de l'imagerie à partir d'un rayonnement X ou γ, il convient tout d'abord de déterminer la quantité de porteurs de charges (paires électrons / trous) créés par l'interaction de chacun des photons X ou γ au sein du matériau semi-conducteur. Il convient, corollairement, de pouvoir localiser cette zone d'interaction avec précision. En d'autres termes, on cherche à obtenir une résolution optimale tant en termes d'énergie, et donc directement corrélée à la quantité de porteurs de charges résultant de chaque interaction, qu'en terme de localisation du lieu d'incidence desdits photons.

S'agissant de la résolution en énergie, la mise en oeuvre d'un matériau semi-conducteur se heurte à un problème technique inhérent au matériau proprement dit. En effet, l'aptitude des porteurs de charge (électrons et trous) à migrer vers des électrodes sans se faire piéger par les défauts présents dans ledit matériau, conditionne la résolution en énergie du spectre mesuré.

Cette aptitude est qualifiée dans la pratique de propriété de transport des porteurs de charge. Elle est mesurée par la mobilité et la durée de vie desdits porteurs de charge au sein du matériau semi-conducteur soumis à la tension de polarisation mentionnée précédemment.

Les défauts observés au sein du matériau semi-conducteur sont aujourd'hui bien connus. Ils sont essentiellement constitués d'inclusions, de macles, de joints de grains, de « pipes » (tubes vides), de défauts chimiques (présences d'éléments étrangers, lacunes....), bref autant de défauts au niveau desquels sont susceptibles d'être piégés les porteurs de charge, et plus particulièrement les trous.

Malgré les progrès réalisés dans le domaine de la cristallogenèse, de tels défauts natifs ne peuvent aujourd'hui être évités. Par exemple, dans un détecteur semi-conducteur réalisé à base de CdZnTe, les trous parviennent difficilement jusqu'aux électrodes, et notamment jusqu'à la cathode. C'est en raison de ce problème de collecte incomplète que d'une part, la résolution en énergie est dégradée, et que d'autre part, l'efficacité de collecte pour une énergie déterminée est également amoindrie.

L'expérience démontre que seuls les électrons parviennent à migrer sur de longues distances, rendant de fait le signal induit à l'anode dépendant de leur lieu de création. Or, parmi les différentes possibilités visant à promouvoir la résolution spatiale, on a proposé de segmenter l'anode sous la forme de pixels et de réduire la taille desdits pixels, outre le pas séparant deux pixels consécutifs. L'avantage immédiat inhérent à la mise en oeuvre d'une anode pixellisée réside dans l'"effet pixel", qui permet de rendre moins dépendant la collecte des électrons générée par l'interaction des photons du lieu de leur création ou, de manière générale, du lieu d'interaction du rayonnement. Cet « effet pixel » a par exemple été illustré dans la publication « Charge Transport in Arrays of Semiconductor Gamma-Ray Detectors » H. Barret et al , Physical Review Letter, Volume 75, p.156 - 159.

Cependant, il convient de relever que cet *"effet pixel"* présente deux caractéristiques antinomiques :
- le système d'imagerie mettant en oeuvre le détecteur précité, peut imposer une résolution spatiale optimisée, et partant un pas de pixel, notamment de l'anode, qui n'est pas nécessairement compatible avec une correction par "effet pixel" efficace ;
- le système d'imagerie précité peut imposer une performance en termes de résolution en énergie, et donc un pas de pixel anode qui n'est pas nécessairement compatible avec la résolution spatiale du système attendu.

Afin de compenser également la collecte incomplète des charges, et notamment des trous générés en suite de l'interaction du rayonnement incident avec le matériau semi-conducteur constitutif du détecteur, on a également proposé d'utiliser en plus de la simple mesure d'amplitude du signal à l'anode, la mesure d'un ou de plusieurs autres paramètres en relation avec la forme du signal électrique obtenu.

Ces paramètres peuvent par exemple être constitués par :
- la durée de montée du signal anode ou du signal cathode à son amplitude maximum ;
- le signal cathode ;
- le rapport signal cathode / signal anode.

On obtient ce faisant, un spectre bi-paramétrique, permettant de déterminer la profondeur d'interaction du photon dans le matériau semi-conducteur constitutif du détecteur.

On a décrit par exemple dans le document FR 2 738 919, la mise en oeuvre d'un tel procédé. Le procédé de correction qui y est décrit, est basé sur l'extraction de deux paramètres, en l'espèce l'amplitude et la durée de montée du signal, à partir du seul signal anode. Le spectre bi-paramétrique est obtenu alors en mesurant simultanément l'amplitude et la durée de montée du signal électrique obtenu en sortie d'un préamplificateur de charges relié à l'anode. Les données sont stockées dans un histogramme à deux dimensions constitutif du spectre bi-paramétrique. Cependant, compte tenu des signaux disponibles, il est possible d'obtenir d'autres spectres bi-paramétriques, notamment basés sur l'utilisation du signal cathode en plus du signal anode.

A titre exemplatif, on a proposé les spectres bi-paramétriques suivants :
- rapport signal cathode / signal anode (C/A) ou signal cathode (C) en fonction du signal de chaque pixel anode,
- rapport du signal cathode / signal somme des anodes (C/SA) ou signal cathode (C) en fonction de la somme de tous les signaux anode (SA),
- durée de montée du signal cathode (TC) en fonction du signal cathode (C).

Le spectre bi-paramétrique utilisant limitativement le signal anode, c'est-à-dire mettant en oeuvre la durée du signal anode en fonction du signal anode, présente l'intérêt de ne dépendre que du seul signal anode. Cette caractéristique permet d'utiliser un tel spectre soit sur les détecteurs dénommés selon l'expression anglo-saxonne "*planars*", c'est-à-dire dont les deux électrodes, respectivement anode et cathode, sont opposées et pleine face, soit sur les détecteurs monolithiques, c'est à dire présentant une cathode pleine face et une anode segmentée comprenant un matrice de pixels (la cathode pouvant elle aussi être pixellisée).

En revanche, la mise en oeuvre d'un tel spectre bi-paramétrique présente une difficulté : la mesure d'une durée de montée du signal anode accentuée en relation avec la diminution du pas de l'anode pixellisée. Le signal correspondant à la durée de montée ne peut pas être mesurée sur les détecteurs monolithiques (une cathode pleine face et une anode segmentée comprenant un matrice de pixels) présentant un rapport épaisseur du détecteur / pas du pixel inférieur à 2.

La mise en oeuvre de spectres bi-paramétriques utilisant le signal cathode et anode présentent l'intérêt d'être utilisables quel que soit le pas du pixel anode, puisque ledit spectre est fonction du seul signal cathode. En revanche, la mise en oeuvre de tels spectres présente l'inconvénient inhérent au fait que le signal cathode devient très vite bruyant lorsque sa surface est grande, c'est-à-dire pour des détecteurs monolithiques de grandes dimensions.

Quels que soient les spectres bi-paramétriques du type précité mis en oeuvre, un étalonnage de l'efficacité de la collecte (signal anode) en fonction de la profondeur d'interaction (durée de montée du signal anode ou rapport signal cathode / anode) permet alors de déterminer la charge réellement déposée par le photon incident, indépendamment du lieu d'interaction.

Incontestablement, la mise en oeuvre simultanée des deux techniques précédentes, à savoir "effet pixel" et correction bi-paramétrique, permet de déterminer de manière satisfaisante la correction de la profondeur d'interaction du rayonnement incident au sein du détecteur, cette correction étant nécessaire pour combiner la résolution en énergie et l'efficacité de détection.

Cependant, en raison des performances de plus en plus élevées demandées au détecteur, on est amené à réduire encore la taille des pixels, notamment au niveau anodique, aboutissant à la genèse d'un phénomène tendant à s'amplifier : le partage des charges, qui aboutit à la détérioration des performances globales du détecteur, malgré l'utilisation desdites techniques.

Ce phénomène de partage de charges va être décrit ci-après.

Lorsqu'un rayonnement X est absorbé dans un matériau semi-conducteur, l'interaction en résultant créée un nuage de paires électrons / trous. La taille de ce nuage de charges est principalement liée aux fluorescences de photons X, consécutive à l'effet photoélectrique. Cette taille est également inhérente à la distance parcourue par les photoélectrons et à l'effet Compton. La dimension typique de ce nuage de charges est de quelques centaines de microns.

Lorsque ce nuage migre dans le détecteur, il est soumis à un phénomène de diffusion, ajoutant une distance comprise entre quelques dizaines et quelques centaines de micromètres, selon l'épaisseur du détecteur, selon la tension appliquée à celui-ci et selon la profondeur d'interaction du photon dans le détecteur. La pratique montre que ce nuage de charges peut être partagé entre au moins deux anodes, si l'interaction se produit suffisamment près de la limite entre les deux dites anodes. Plus les dimensions des anodes sont réduites, plus ce problème de partage de charges devient important.

Or, on a démontré qu'afin d'aboutir à une amélioration des performances des détecteurs en question, on souhaitait effectivement réduire la taille des anodes, permettant d'atteindre de plus hautes résolutions spatiales. Si la charge des paires de porteurs électriques résultant de l'interaction du photon au sein du matériau semi-conducteur est partagée entre deux ou plus de deux anodes, l'information relative à l'énergie d'une part, et à la localisation spatiale outre, à la profondeur d'interaction du photon, sont altérées, voire même perdues.

Il est possible de mesurer simultanément l'amplitude du signal induit au niveau de chacune des anodes. Ainsi, on peut déterminer par convention un évènement réputé résulter d'un partage de charges si, pour plusieurs anodes et notamment pour au moins deux anodes, l'amplitude du signal mesuré est supérieur à un seuil déterminé. Le partage de charges est alors défini comme la mesure simultanée de signaux ayant dépassé le seuil en question et associé à plusieurs anodes.

On conçoit sans difficulté qu'un tel partage de charges induit une altération de la résolution spatiale.

Aussi, et pour compenser ce partage de charges, il est envisageable:
- soit de supprimer les évènements ayant entraînés un tel partage de charges ; dans ce cas, cette suppression intervient au détriment de l'efficacité de détection, qui peut même devenir nulle pour des très petits pixels ; à l'évidence, bien évidemment, une telle solution ne favorise pas le but recherché de la présente invention, à savoir l'optimisation des performances de résolution en énergie et en résolution spatiale d'un tel détecteur ;
- soit, de manière alternative, de sommer des amplitudes mesurées sur chacune des anodes, afin de permettre de retrouver l'énergie des photons incidents. Cependant, cette sommation ne correspond pas nécessairement à cette énergie si, en raison de la différence entre la conductivité de surface et celle de volume et/ou en raison du piégeage des charges près de la surface, des charges sont effectivement perdues et la somme des amplitudes reste inférieure à l'énergie des photons absorbés. Quoi qu'il en soit dans cette alternative, le problème de la dépendance de la charge mesurée avec la profondeur d'interaction demeure.

Il résulte de ces différentes constatations, qu'afin d'aboutir à une optimisation des performances d'un détecteur à semi-conducteur, il convient de tenir compte de ce phénomène de partage de charges avec ou sans perte de collecte de charges, outre de la dépendance de ce partage de charges avec la profondeur d'interaction et enfin, de la perte de collecte en raison de ce partage de charges.

### EXPOSE DE L'INVENTION

La présente invention a pour objectif d'intégrer ces différentes données en conservant le principe d'une diminution des dimensions des pixels anodiques, dont on aura bien compris qu'elle favorise l'optimisation de la résolution spatiale d'un tel détecteur.

Celle-ci vise donc tout d'abord un procédé d'optimisation de la résolution d'un détecteur à semi-conducteur destiné à détecter des rayonnements électromagnétiques, et notamment des rayons X ou des rayons γ, et muni d'électrodes rapportées sur deux faces opposées dudit détecteur, respectivement une cathode et une anode pixellisée.

Selon l'invention, on détermine le signal représentatif de la somme des charges détectées par toute ou partie des anodes. Ce signal résulte notamment du signal d'induction inhérent à la migration des charges générées en suite de l'interaction du rayonnement incident avec le matériau semi-conducteur constitutif du détecteur.

A l'aide du signal représentatif de la somme des charges détectées par toute ou partie des anodes, on établit un ou plusieurs spectres bi-paramétriques en fonction de ce signal, de telle sorte à déterminer la perte éventuelle en termes de collecte lorsqu'un partage de charges est intervenu, et son corollaire, la mise en oeuvre d'un traitement adapté en fonction de la nature du résultat souhaité.

Le procédé conforme à l'invention est défini dans la revendication 1.

Le signal représentatif de la somme des charges détectées par toute ou partie des anodes inclut d'une part, les charges ayant effectivement atteint une ou plusieurs anodes, donc des charges réelles, et les charges dites induites, qui sont de nature virtuelle, dans la mesure où elles proviennent de la migration des porteurs de charge au sein du matériau semi-conducteur en suite de l'interaction d'un photon incident avec ce dernier, mais qui disparaissent une fois le déplacement terminé.

Ces signaux résultent de la mesure du signal cathode ou du signal anode.

Les spectres bi-paramétriques peuvent être les suivants :
- rapport signal cathode / signal somme des anodes (C/SA) en fonction du signal somme des anodes (SA) ;
- rapport signal cathode (C) en fonction du signal somme des anodes (SA).

Dans un souci de diminution du bruit inhérent à la mesure, pour chaque évènement, c'est à dire pour chaque photon incident, on détermine le signal induit sur chaque anode et sur la cathode, et l'on compare ces signaux à un seuil énergétique respectif défini au préalable, en deçà duquel, l'évènement en question n'est pas pris en compte.

Ces seuils énergétiques respectifs des anodes et de la cathode sont directement liés aux performances intrinsèques de la chaîne de mesures, facilement déterminées par l'homme du métier.

Le traitement adapté précité peut être de deux natures :
Dans un premier cas, les évènements résultant d'une perte de collecte de charges, identifiés selon le procédé décrit précédemment sont purement et simplement supprimés au niveau du spectre final, dans un souci de ne pas affecter la résolution en énergie.
Dans un second cas, on extrait du spectre bi-paramétrique correspondant au signal de la durée de montée du signal cathode (TC) en fonction du signal correspondant à l'amplitude de la cathode (C) l'énergie totale correspondant à cet évènement particulier, pour en tenir compte au niveau de la restitution du spectre final, et partant, pour conserver l'efficacité en termes de détection.
Enfin l'optimisation des performances du détecteur de l'invention peut également se traduire par la correction de la profondeur d'interaction du photon incident au sein dudit détecteur.

### BREVE DESCRIPTION DES FIGURES

La manière dont l'invention peut être mise en oeuvre, et les avantages qui en résultent ressortiront mieux des exemples qui suivent, à l'appui des figures annexées, dans lesquelles :
La figure 1 est une illustration schématique d'un détecteur à semi-conducteur ;
La figure 2 est la représentation d'un spectre bi-paramétrique du signal de l'amplitude de la cathode en fonction du signal de la sommes des amplitudes des anodes collectances, dont la figure 3 est une exploitation ;
La figure 4 est la représentation d'un spectre illustrant le signal de l'amplitude mesurée sur une anode en fonction de celle mesurée sur l'anode adjacente en suite d'un phénomène de partage de charge sans perte de collecte de charges, et dont la figure 5 est le spectre en énergie associé ;
Les figures 6 et 7 sont des représentations analogues aux figures 4 et 5 mais avec perte de collecte de charges.
La figure 8 est une représentation d'un synoptique visant à illustrer le mode de gestion des évènements détectés selon l'invention au moyen d'un détecteur à semi-conducteur.

### DESCRIPTION DETAILLEE DE L'INVENTION

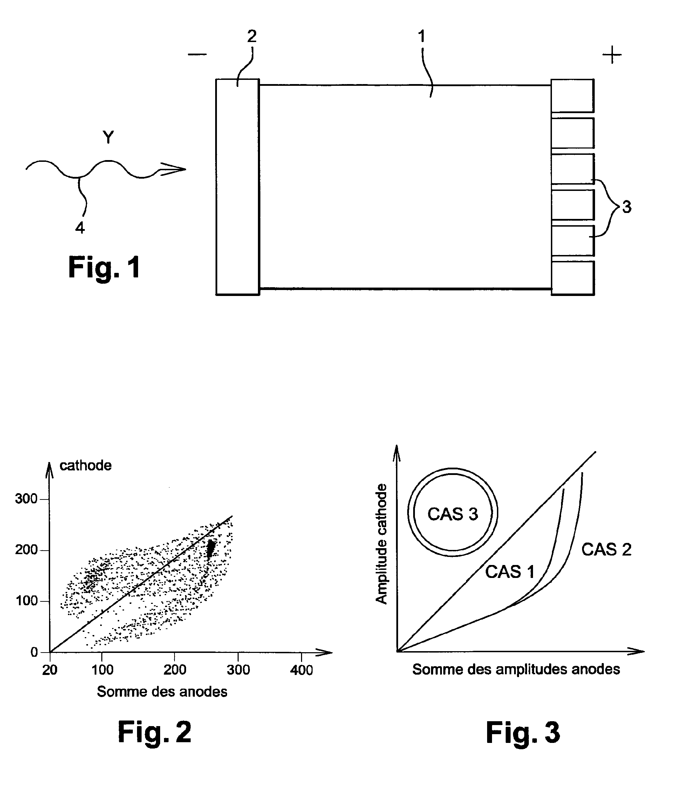

On a très succinctement décrit en relation avec la figure 1 un détecteur à semi-conducteur, tel que mis en oeuvre par la présente invention. Celui-ci comprend un semi-conducteur massif **1** réalisé par exemple par cristallogenèse, et par exemple en CdZnTe ou en CdTe. Ces matériaux sont aujourd'hui bien connus pour leur capacité à transformer l'énergie résultant d'un photon X ou γ **4** en une paire de charges électron / trou.

Des électrodes, respectivement cathode **2** et anode **3** sont rapportées sur les deux faces principales opposées du semi-conducteur **1.** Ce faisant, on applique une tension de polarisation au semi-conducteur, permettant d'assurer la migration des charges générées en suite de l'interaction du photon **4** avec le semi-conducteur **1.**

Par ailleurs, on mesure sur chacune des électrodes un signal, dont l'amplitude est directement corrélée à la quantité de charges ainsi générées.

L'anode **3** mise en oeuvre est pixellisée, l'un des objectifs de la présente invention étant de réduire autant que faire se peut la dimension des pixels outre le pas inter-pixel, dans le souci d'optimiser la résolution spatiale du détecteur, sans pour autant altérer la résolution en énergie.

Selon une première caractéristique de l'invention, on mesure pour chacun des photons absorbés par le détecteur, le signal induit à la cathode et le signal induit simultanément sur chacune des anodes (résultant de la pixellisation). Ces signaux sont en fait des tensions correspondant chacune à une charge collectée. Ces tensions correspondent à leur tour à une énergie.

Chacun des signaux ainsi mesurés est comparé par l'électronique associée au détecteur à un seuil énergétique en deçà duquel, l'évènement ayant généré ledit signal est rejeté. Comme déjà mentionné précédemment, ces seuils sont définis en fonction des performances de détection de la chaîne de mesure.

En revanche, tout signal supérieur à ce seuil est pris en considération au niveau de l'établissement du spectre final ou de l'image finale, outre notamment pour la réalisation de un ou de plusieurs spectres bi-paramétriques, tel que décrit ci-après.

Ainsi que rappelé en préambule de la présente description, parmi les différents éléments à prendre en considération pour optimiser la résolution en énergie d'un tel détecteur, tout en conservant une haute résolution spatiale, figurent notamment les phénomènes liés au partage des charges, et plus particulièrement des électrons entre deux ou plusieurs anodes, avec ou sans perte de collecte desdits électrons.

Il convient donc, dans un premier temps, d'identifier ces phénomènes de partage de charges, puis une fois identifiés, de les traiter en tenant compte ou non de la perte de collecte des charges associée.

### IDENTIFICATION ET TRAITEMENT DU PARTAGE DE CHARGES

Un tel partage de charges intervient dès lors qu'au moins deux seuils sont dépassés parmi les signaux anodes.

On procède à la mesure simultanée des signaux anodes, permettant d'obtenir le signal SA correspondant à la somme des amplitudes de chacune des anodes. Cette somme SA permet de compenser le partage de charge sans perte de collecte.

L'expérience démontre cependant que ce signal SA est le plus souvent pollué par un bruit important, car il inclut les signaux générés par toutes les anodes, c'est à dire y compris celles qui n'ont pas déclenché le seuil énergétique fixé une fois les charges collectées. Ce bruit associé à la mesure du signal SA peut alors devenir trop élevé si le nombre d'anodes est grand, et donc dans le cas où le pas des pixels est faible.

Afin de surmonter cet inconvénient, l'invention propose de mesurer le signal SA dès le début de la migration affectant les charges générées en suite de l'interaction d'un photon avec le matériau semi-conducteur **1**, et ce, afin de localiser au plus tôt les anodes qui seront effectivement sollicitées. Cela suppose la mise en oeuvre d'une électronique permettant de mesurer le signal d'induction transitoire.

Un tel signal se produit seulement durant la migration des charges sur les anodes proches de l'anode qui va les collecter. Ce signal d'induction est dit transitoire car il revient à zéro quand les charges atteignent l'anode collectante.

En d'autres termes, on procède à une pré-localisation, effectuée durant la migration des charges avant même d'être collectées par l'anode collectante. Cette pré-localisation va ainsi permettre de limiter le nombre d'anodes participant à la détermination du signal SA, et donc corollairement permet de limiter le bruit associé.

En général, pour des photons de même énergie, on observe une corrélation sensiblement linéaire entre l'amplitude du signal anode A et la durée de montée dudit signal, ou entre le signal anode et le signal cathode et donc la profondeur d'interaction des photons au sein du matériau semi-conducteur, et partant la correction qu'il convient d'y apporter en terme d'énergie.

Selon l'invention, on procède à la correction de la profondeur d'interaction en établissant le spectre bi-paramétrique du rapport signal cathode / signal somme des anodes (C/SA) ou du seul signal cathode (C) en fonction du signal somme des anodes SA limité aux anodes induisant un signal transitoire, c'est à dire aux seules anodes collectantes. Cette corrélation a par exemple été décrite dans les publications suivantes :
- "1-D position sensitive single carrier semiconductor detectors" - Z. He et al - Nuclear Instruments and Methods - A 380 (1996) 228 - 231 ;
- "Spectroscopy with pixelated CdZnTe gamma detectors - experiment versus theory" - A. Shor et al - Nuclear Instruments and Methods - A 458 (2001) 47-54.

On a représenté au sein de la figure 2 le spectre bi-paramétrique du signal cathode C en fonction du signal représentatif de la somme des anodes SA.

Au sein de celui-ci, la diagonale passant par l'origine correspond aux interactions proches de la cathode, c'est à dire à une profondeur maximale du détecteur.

Pour chacune des interactions se produisant dans le détecteur et matérialisées par les points situés en dessous de cette diagonale, on observe une corrélation entre le signal SA et l'amplitude du signal mesurée à la cathode, due à la dépendance de l'amplitude induite en fonction de la profondeur d'interaction.

Les amplitudes ainsi mesurées correspondent aux nuages de charges non partagées (cas 1) et partagées (cas 2) sans perte de collecte de charge et leur corrélation avec le signal cathode permet de visualiser puis corriger leur dépendance avec la profondeur d'interaction. Ces deux hypothèses (cas 1 et cas 2) sont représentées par les lignes iso-énergies apparaissant sur la figure 3, qui est une exploitation plus pratique du spectre de la figure 2.

En revanche, tous les points figurant au dessus de la diagonale sur ce spectre, et identifiés par le rond (cas 3) sur la figure 3 résultent d'interactions pour lesquelles le signal SA n'est pas corrélé avec le signal cathode C et sont donc mal mesurés : il s'agit d'interactions ayant induit un partage de charge avec perte de collecte de charges.

Pour chacun de ces points, deux options de travail sont envisageables.

Si l'on entend privilégier la résolution en énergie, alors ces points sont supprimés du spectre final. Si en revanche, on souhaite donner la priorité à l'efficacité en termes de détection, et donc d'évènements, on doit prendre en compte ces évènements, mais procéder à une correction, telle que définie ci-après.

### CORRECTION DE LA PERTE DE COLLECTE DU PARTAGE DE CHARGES AVEC LE SIGNAL CATHODE

Pour ce faire, on utilise le signal, et donc l'énergie mesurée simultanément à la cathode, par exemple à l'aide d'un spectre bi-paramétrique de la montée du signal cathode en fonction du signal cathode.

En effet, quand des charges sont piégées près des anodes, la charge totale induite à la cathode n'est pas trop affectée car la cathode intègre une grande partie du mouvement des charges. Ces évènements sont pris en compte pour favoriser l'efficacité de détection, et la profondeur d'interaction est corrigée en utilisant le spectre bi-paramétrique TC vs C (durée de montée du signal cathode en fonction du signal cathode), et tel que par ailleurs explicitée au sein des publications précitées.

### CORRECTION DE LA PERTE DE COLLECTE DU PARTAGE DE CHARGES AVEC LE SIGNAL ANODE

Dans une solution alternative, la correction de la profondeur d'interaction peut être réalisée à l'aide du signal anode.

Lorsque les charges résultant d'une interaction sont partagées entre deux pixels, on mesure simultanément l'amplitude des deux signaux, c'est à dire l'amplitude sur deux anodes.

Pour caractériser ce partage de charges, un graphique représentatif de l'amplitude mesurée au pixel 1 en fonction de l'amplitude mesurée au pixel 2 pour les évènements partagés est effectué. En théorie, ces points sont alignés sur un segment qui joint les deux croix matérialisées sur ces graphes.

Si tous les photons incidents sont de même énergie et si l'on néglige la dépendance de l'amplitude mesurée avec la profondeur d'interaction, la perte de charges et le bruit, la somme des amplitudes ainsi déterminée doit être constante. En sommant les amplitudes, on retrouve l'énergie des photons incidents. Cette mesure permet de caractériser le partage de charges et de retrouver le spectre en énergie incidente.

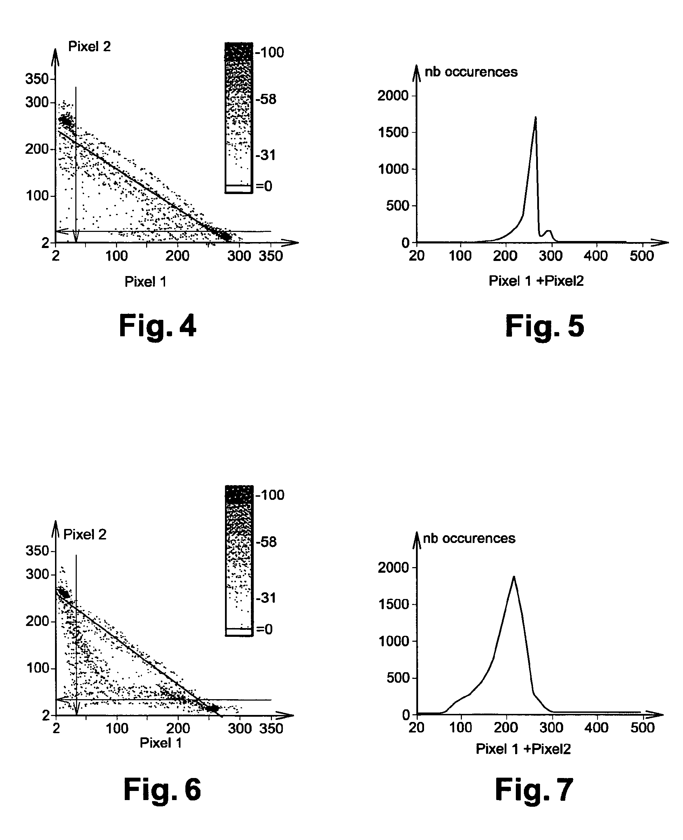

En pratique, il convient d'ajouter le bruit de chaque mesure, ainsi que la dépendance de l'amplitude mesurée avec la profondeur d'interaction. On obtient de fait un tracé du type de celui représenté sur la figure 4, obtenu pour un détecteur à base de CdZnTe soumis à une tension de polarisation de 400 Volts. Sur cette figure, le trait incliné relie l'amplitude mesurée à 122 KeV pour les deux pixels concernés. Bien évidemment, on observe une concentration élevée de détection au niveau de chacun des deux pixels.

A l'aide de cette mesure, le spectre en énergie peut être réalisé en utilisant les coups à droite du trait vertical et au-dessus du trait horizontal. Ces deux traits correspondent au seuil au-dessus duquel les charges sont considérées comme partagées.

A cet égard, on peut noter que ce type d'acquisition peut être utilisé pour connaître le seuil à appliquer, mentionné précédemment.

Dans ce cas de figure particulier, la somme des amplitudes des deux pixels peut être utilisée pour traiter les évènements partagés. Cependant, pour ce même détecteur, entre deux autres pixels, on peut observer des résultats plus éloignés de la théorie (figure 6). On mesure en effet dans cet autre cas de figure une "courbure" du partage de charges, entraînant un spectre en énergie très mal résolu (figure 7).

L'identification et la prise en compte de ces courbures entre chaque anode lors d'une acquisition de pré-calibration permettent de corriger le compte et ainsi améliorer l'efficacité de détection.

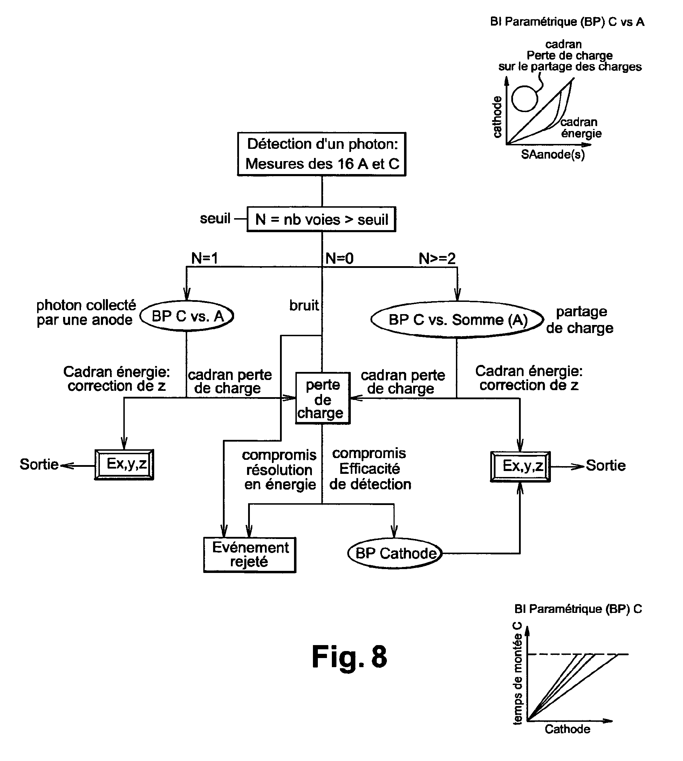

On a représenté en relation avec la figure 8, un synoptique propre à illustrer un mode de gestion des évènements obtenus au moyen d'un détecteur à semi-conducteur mettant en oeuvre une anode pixellisée à 16 pixels, notamment lorsque le phénomène de partage de charges est important.

L'exemple donné s'appuie sur la mesure des signaux anodes (A), la mesure du signal de la somme des anodes collectantes (SA), la mesure du signal cathode (C), et la durée de montée du signal cathode (TC), afin de pouvoir construire en direct les spectres bi-paramétriques C vs A, C vs SA et TC vs C.

Dans cette figure :
- N représente le nombre de voies, c'est à dire le nombre de signaux anode supérieurs au seuil énergétique défini ;
- BP signifie spectre bi-paramétrique ;
- z correspond à la profondeur d'interaction au sein du détecteur, mesurée depuis la cathode.

Bien évidemment, les corrections dont il est fait mention sont réalisées à l'aide d'une électronique dédiée. Par ailleurs, la gestion même de la détection, considérée comme connue, et mettant en oeuvre des préamplificateurs, filtres, et autres composants électroniques n'est pas décrite, car considérée comme connue de l'homme du métier.

## Revendications

1. Procédé de traitement de données obtenues au moyen d'un détecteur à semi-conducteur destiné à détecter des rayonnements électromagnétiques, et notamment des rayons X ou des rayons γ, ledit détecteur étant muni d'électrodes rapportées sur deux de ses faces opposées, respectivement une cathode et une anode pixellisée, ***caractérisé :***
• **en ce que** l'on détermine un premier signal représentatif de la somme des charges détectées par toute ou partie des anodes ;
• **en ce que** l'on détermine un second signal représentatif de la charge détectée sur la cathode ;
• **en ce qu'**à l'aide des premier et second signaux, on établit un ou plusieurs spectres bi-paramétriques choisis parmi les spectres suivants :
■ rapport signal cathode/signal de la somme des signaux anodes (C/SA) en fonction du signal somme des anodes (SA) ;
■ rapport signal cathode (C) en fonction du signal représentatif de la somme des anodes (SA) ; et
• et **en ce qu'**à partir du ou des spectres bi-paramétriques ainsi établis, on détermine si un partage de charge est intervenu au niveau de l'anode pixellisée et la perte éventuelle en termes de collecte de charges lorsqu'un partage de charges est intervenu au niveau de l'anode pixellisée.

2. Procédé de traitement de données selon la revendication 1, ***caractérisé* en ce qu'**en fonction de la détermination de la perte éventuelle en termes de collecte de charges au niveau de l'anode pixellisée, on met en oeuvre un traitement adapté en fonction de la nature du résultat souhaité en termes de détection.

3. Procédé de traitement de données selon l'une des revendications 1 et 2, ***caractérisé* en ce que** pour chaque évènement, c'est à dire pour chaque photon incident, on détermine le signal induit sur chaque anode et sur la cathode, et l'on compare ces signaux à un seuil énergétique respectif défini au préalable, en deçà duquel l'évènement en question n'est pas pris en compte.

4. Procédé de traitement de données selon l'une des revendications 1 à 3, ***caractérisé* en ce que** le détecteur est muni d'une cathode également pixellisée.

5. Procédé de traitement de données selon l'une des revendications 1 à 4, ***caractérisé* en ce que** le signal représentatif de la somme des charges détectées par les anodes est déterminé par la mesure du signal d'induction inhérent à la migration des charges générées en suite de l'interaction du rayonnement incident avec le matériau semi-conducteur constitutif du détecteur.

6. Procédé de traitement de données selon la revendication 1, ***caractérisé* en ce que** le traitement adapté pour tenir compte d'un évènement ayant entraîné un partage de charges avec perte de collecte de charges consiste à supprimer l'évènement correspondant au niveau du spectre, de la mesure ou de la restitution finaux.

7. Procédé de traitement de données selon la revendication 1, ***caractérisé* en ce que** le traitement adapté pour tenir compte d'un évènement ayant entraîné un partage de charges avec perte de collecte de charges consiste à extraire du spectre bi-paramétrique correspondant au signal de la durée de montée du signal cathode (TC) en fonction du signal de l'amplitude de la cathode (C) l'énergie totale correspondant à cet évènement particulier, et à en tenir compte au niveau de la restitution du spectre ou de la mesure ou restitution finaux, pour conserver l'efficacité du détecteur en termes de détection.

8. Procédé de traitement de données selon l'une des revendications 1 à 7, ***caractérisé* en ce qu'**à l'aide des signaux représentatifs de la somme des charges détectées par toute ou partie des anodes, et des spectres bi-paramétriques établis en fonction de ceux-ci, on détermine la correction de la profondeur d'interaction des photons incidents détectés.

9. Procédé de traitement de données selon l'une quelconque des revendications précédentes, ***caractérisé* en ce que** la détermination du partage de charges et de la perte de collecte de charges est réalisée à partir d'une classification prédéterminée de lignes iso-énergie du ou des spectres bi-paramétriques établis.

## Claims

1. A method for processing data obtained by means of a semiconductor detector intended to detect electromagnetic radiation, especially X-rays or γ rays, said detector being equipped with electrodes separately mounted on two opposite surfaces of said detector, namely a cathode and a pixelated anode respectively:
• wherein one determines a first signal that is representative of the sum of the charges detected by all or some of the anodes;
• wherein one determines a second signal that is representative of the charge detected by the cathode;
• wherein the first and second signals are used in order to establish one or more biparametric spectra selected from the following spectra:
- cathode-to-sum-of-anodes-signal ratio (C/SA) as a function of the sum of anodes signal (SA);
- cathode signal ratio (C) as a function of the signal that is representative of the sum of the anodes (SA).,
• and wherein, on the basis of the biparametric spectrum or spectra thus established, one determines if charge sharing occurred on the pixilated anode and any charge collection loss if charge sharing occurred on the pixelated anode.

2. The method for processing data as claimed in claim 1, wherein, depending on the determination of any charge collection loss on the pixelated anode, one uses appropriate processing depending on the type of result desired in terms of detection.

3. The method for processing data as claimed in either of claims 1 and 2, wherein, for each event, i.e. for each incident photon, one determines the signal induced on each anode and on the cathode and one compares these signals to a respective predefined energy threshold, beyond which the event in question is ignored.

4. The method for processing data as claimed in any of claims 1 to 3, wherein the detector is equipped with a cathode that is also pixelated.

5. The method for processing data as claimed in any of claims 1 to 4, wherein the signal that is representative of the sum of the charges detected by the anodes is determined by measuring the induced signal inherent in migration of the charges generated as a result of interaction between the incident radiation and the semiconductor material that constitutes the detector.

6. The method for processing data as claimed in claim 1, wherein the appropriate processing in order to take into account an event that involved charge sharing with charge collection loss involves cancelling the event that corresponds to the level of the spectrum, measurement or final restoration.

7. The method for processing data as claimed in claim 1, wherein the appropriate processing in order to take into account an event that involved charge sharing with charge collection loss involves extracting from the biparametric spectrum that corresponds to the signal for the rise-time of the cathode signal (TC) as a function of the cathode amplitude signal (C) the total energy corresponding to this particular event and taking it into account when restoring the spectrum or measurement or final restoration in order to preserve the efficiency of the detector in terms of detection.

8. The method for processing data as claimed in any of claims 1 to 7, wherein by using signals that are representative of the sum of the charges detected by all or some of the anodes and biparametric spectra established as a function of the latter, one determines the correction to be applied to the interaction depth of the incident photons detected.

9. The method for processing data as claimed in any of claims 1 to 7, wherein the determination of the charges sharing and of the charge collection loss is realized from a predetermined classification of iso-energetic lines of the established biparametric spectrum or spectra.

## Patentansprüche

1. Verfahren zum Verarbeiten von Daten, die mittels eines Halbleiterdetektors erhalten werden, der dazu bestimmt ist, elektromagnetische Strahlung und insbesondere Röntgen- oder γ-Strahlen zu erfassen, wobei der Detektor mit auf seinen beiden entgegengesetzten Seiten aufgebrachten Elektroden, einer Kathode und einer pixelierten Anode, versehen ist, **dadurch gekennzeichnet, dass**
• ein erstes Signal bestimmt wird, das für die Summe der durch alle oder einen Teil der Anoden erfassten Ladungen steht;
• ein zweites Signal bestimmt wird, das für die an der Kathode erfasste Ladung steht;
• mittels des ersten und zweiten Signals ein biparametrisches Spektrum oder mehrere biparametrische Spektren ermittelt wird bzw. werden, das bzw. die aus den folgenden Spektren ausgewählt ist bzw. sind:
■ Verhältnis Kathodensignal/Signal der Summe der Anodensignale (C/SA) in Anhängigkeit vom Summensignal der Anoden (SA);
■ Verhältnis Kathodensignal (C) in Abhängigkeit des für die Summe der Anoden (SA) stehenden Signals; und
• aus dem so ermittelten biparametrischen Spektrum bzw. aus den so ermittelten biparametrischen Spektren bestimmt wird, ob eine Ladungstrennung in Bezug auf die pixelierte Anode stattgefunden hat, und der eventuelle Verlust hinsichtlich einer Sammlung von Ladungen bestimmt wird, wenn eine Ladungstrennung in Bezug auf die pixelierte Anode stattgefunden hat.

2. Verfahren zum Verarbeiten von Daten nach Anspruch 1, **dadurch gekennzeichnet, dass** in Abhängigkeit von der Bestimmung des eventuellen Verlusts hinsichtlich einer Sammlung von Ladungen in Bezug auf die pixelierte Anode, eine in Abhängigkeit von der Beschaffenheit des hinsichtlich einer Erfassung gewünschten Ergebnisses angepasste Verarbeitung durchgeführt wird.

3. Verfahren zum Verarbeiten von Daten nach einem der Ansprüche 1 und 2, **dadurch gekennzeichnet, dass** für jedes Ereignis, d.h. für jedes eintretende Photon, das induzierte Signal an jeder Anode und an der Kathode bestimmt wird, und diese Signale mit einem jeweiligen vorab festgelegten energetischen Schwellenwert verglichen werden, unter dem das betreffende Ereignis nicht berücksichtigt wird.

4. Verfahren zum Verarbeiten von Daten nach einem der Ansprüche 1 bis 3, **dadurch gekennzeichnet, dass** der Detektor mit einer ebenfalls pixelierten Kathode versehen ist.

5. Verfahren zum Verarbeiten von Daten nach einem der Ansprüche 1 bis 4, **dadurch gekennzeichnet, dass** das durch die Anoden erfasste, für die Summe der Ladungen stehende Signal durch Messen des Signals der Induktion bestimmt wird, die durch die Wanderung der Ladungen bedingt ist, die infolge der Wechselwirkung der einfallenden Strahlen mit dem Halbleitermaterial entstehen, aus dem der Detektor aufgebaut ist.

6. Verfahren zum Verarbeiten von Daten nach Anspruch 1, **dadurch gekennzeichnet, dass** die Verarbeitung, die dazu ausgelegt ist, ein Ereignis, das eine Ladungstrennung mit Sammlungsverlust von Ladungen mit sich gebracht hat, darin besteht, das entsprechende Ereignis in Bezug auf das endgültige Spektrum, die endgültige Messung und die endgültige Wiederherstellung wegzulassen.

7. Verfahren zum Verarbeiten von Daten nach Anspruch 1, **dadurch gekennzeichnet, dass** die Verarbeitung, die dazu ausgelegt ist, ein Ereignis, das eine Ladungstrennung mit Sammlungsverlust von Ladungen mit sich gebracht hat, darin besteht, aus dem biparametrischen Spektrum, das dem Signal der Anstiegsdauer des Kathodensignals (TC) entspricht, in Abhängigkeit vom Signal der Amplitude der Kathode (C), die Gesamtenergie zu extrahieren, die dem besonderen Ereignis entspricht, und es in Bezug auf die Wiederherstellung des endgültigen Spektrums oder die endgültige Messung oder Wiederherstellung zu berücksichtigen, um den Wirkungsgrad des Detektors hinsichtlich der Erfassung beizubehalten.

8. Verfahren zum Verarbeiten von Daten nach einem der Ansprüche 1 bis 7, **dadurch gekennzeichnet, dass** mittels der durch alle oder einen Teil der Anoden erfassten, für die Summe der Ladungen stehenden Signale und der in Abhängigkeit von diesen ermittelten biparametrischen Spektren, die Korrektur der Wechselwirkungstiefe der erfassten eintretenden Photonen bestimmt wird.

9. Verfahren zum Verarbeiten von Daten nach einem der vorhergehenden Ansprüche, **dadurch gekennzeichnet, dass** die Bestimmung der Ladungstrennung und des Sammlungsverlusts von Ladungen ausgehend von einer vorbestimmten Klassifizierung von Iso-Energielinien des ermittelten biparametrischen Spektrums oder der ermittelten biparametrischen Spektren erfolgt.
